# EUROPEAN PATENT APPLICATION

(11) **EP 4 564 713 A1**
(43) Date of publication of application: **04.06.2025**
(21) Application number: 23845381.5
(22) Date of filing: 18.07.2023
(51) Int. Cl.: H04L 1/18

(54) **FEEDBACK RESOURCE DETERMINATION METHODS AND APPARATUSES, COMMUNICATION DEVICE, SYSTEM AND STORAGE MEDIUM**

(30) Priority: 25.07.2022 CN 202210880537
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Murgitroyd & Company
(86) International application number: PCT/CN2023/107938
(87) International publication number: WO 2024/022169

(57) **Abstract**

This application discloses a feedback resource determining method and apparatus, a communication device, a system, and a storage medium, and belongs to the technical field of communication. The feedback resource determining method includes: user equipment UE receives a first downlink channel from a network side device (201); and the UE determines a feedback resource according to first information, where the feedback resource is used for the UE to transmit feedback information of the first downlink channel (202). The first information includes at least one of the following: a number of bits of the feedback information; a feedback mode of the feedback information; and a channel type of the first downlink channel.

## Description

### CROSS-REFERENCE TO RELATED APPLICATIONS

This application claims priority to Chinese Patent Application 202210880537.6 filed on July 25, 2022, which is incorporated herein by reference in its entirety.

### TECHNICAL FIELD

This application belongs to the technical field of communication, and in particular, to a feedback resource determining method and apparatus, a communication device, a system, and a storage medium.

### BACKGROUND

Currently, in multicast/broadcast service (Multicast/Broadcast Service, MBS) transmission, a hybrid automatic repeat request acknowledgement (Hybrid automatic repeat request acknowledgement, HARQ-ACK) feedback mode includes a HARQ negative acknowledgement ONLY (Negative Acknowledgement ONLY, NACK ONLY) feedback mode and a HARQ ACK/NNAKC (that is, Hybrid automatic repeat request acknowledgement/negative acknowledgement) feedback mode.

In the HARQ NACK ONLY feedback mode, user equipment (User Equipment, UE) may determine, according to a preset mapping relationship between a bit state of a HARQ-ACK and a physical uplink control channel (Physical Uplink Control Channel, PUCCH) resource, a PUCCH resource for feeding back the HARQ-ACK.

However, according to the foregoing method, in the HARQ NACK ONLY feedback mode, the PUCCH resource for feeding back the HARQ-ACK can only be determined by the UE according to the foregoing preset mapping relationship, so flexibility of determining a feedback resource is poor.

### SUMMARY

Embodiments of this application provide a feedback resource determining method and apparatus, a communication device, a system, and a storage medium, which can solve a problem of poor flexibility in determining a feedback resource.

According to a first aspect, a feedback resource determining method is provided. The method includes: UE receives a first downlink channel from a network side device; and the UE determines a feedback resource according to first information, where the feedback resource is used for the UE to transmit feedback information of the first downlink channel. The first information includes at least one of the following: a number of bits of the feedback information; a feedback mode of the feedback information; and a channel type of the first downlink channel.

According to a second aspect, a feedback resource determining apparatus is provided. The feedback resource determining apparatus includes a receiving module and a determining module. The receiving module is configured to receive a first downlink channel from a network side device. The determining module is configured to determine a feedback resource according to first information, where the feedback resource is used for UE to transmit feedback information of the first downlink channel. The first information includes at least one of the following: a number of bits of the feedback information; a feedback mode of the feedback information; and a channel type of the first downlink channel.

According to a third aspect, a feedback resource determining method is provided. The method includes: the network side device transmits a first downlink channel to UE; and the network side device determines a feedback resource according to first information, where the feedback resource is used for the network side device to receive feedback information of the first downlink channel. The first information includes at least one of the following: a number of bits of the feedback information; a feedback mode of the feedback information; and a channel type of the first downlink channel.

According to a fourth aspect, a feedback resource determining apparatus is provided. The feedback resource determining apparatus includes a transmitting module and a determining module. The transmitting module is configured to transmit a first downlink channel to UE. The determining module is configured to determine a feedback resource according to first information, where the feedback resource is used for the network side device to receive feedback information of the first downlink channel. The first information includes at least one of the following: a number of bits of the feedback information; a feedback mode of the feedback information; and a channel type of the first downlink channel.

According to a fifth aspect, UE is provided. The UE includes a processor and a memory. The memory stores a program or instructions executable by the processor. The program or instructions implement steps of the method according to the first aspect when executed by the processor.

According to a sixth aspect, UE is provided, including a processor and a communication interface. The communication interface is configured to receive a first downlink channel from a network side device. The processor is configured to determine a feedback resource according to first information. The feedback resource is used for the UE to transmit feedback information of the first downlink channel. The first information includes at least one of the following: a number of bits of the feedback information; a feedback mode of the feedback information; and a channel type of the first downlink channel.

According to a seventh aspect, a network side device is provided. The network side device includes a processor and a memory. The memory stores a program or instructions executable by the processor. The program or instructions implement steps of the method according to the first aspect when executed by the processor.

According to an eighth aspect, a network side device is provided, including a processor and a communication interface. The communication interface is configured to transmit a first downlink channel to UE. The processor is configured to determine a feedback resource according to first information. The feedback resource is used for the network side device to receive feedback information of the first downlink channel. The first information includes at least one of the following: a number of bits of the feedback information; a feedback mode of the feedback information; and a channel type of the first downlink channel.

According to a ninth aspect, a communication system is provided, including: UE and a network side device. The UE may be configured to perform steps of the feedback resource determining method according to the first aspect. The network side device may be configured to perform steps of the feedback resource determining method according to the third aspect.

According to a tenth aspect, a readable storage medium is provided. The readable storage medium stores a program or instructions. The program or instructions, when executed by a processor, implement steps of the method according to the first aspect, or implement steps of the method according to the third aspect.

According to an eleventh aspect, a chip is provided. The chip includes a processor and a communication interface. The communication interface is coupled to the processor. The processor is configured to run a program or instructions to implement the method according to the first aspect, or implement the method according to the third aspect.

According to a twelfth aspect, a computer program/program product is provided. The computer program/program product is stored in a storage medium. The computer program/program product is executed by at least one processor to implement steps of the feedback resource determining method according to the first aspect, or implement steps of the feedback resource determining method according to the third aspect.

In embodiments of this application, UE may receive a first downlink channel from a network side device, and may determine a feedback resource according to first information. The feedback resource is used for the UE to transmit feedback information of the first downlink channel. The first information includes at least one of the following: a number of bits of the feedback information; a feedback mode of the feedback information; and a channel type of the first downlink channel. Through this solution, after receiving the first downlink channel from the network side device, the UE may determine, according to at least one of the number of bits of the feedback information, the feedback mode of the feedback information, and the channel type of the first downlink channel, the feedback resource for transmitting the feedback information of the first downlink channel. Therefore, flexibility of determining the feedback resource can be improved.

### BRIEF DESCRIPTION OF THE DRAWINGS

FIG. 1 is a schematic architectural diagram of a wireless communication system according to an embodiment of this application;
FIG. 2 is a flowchart of a feedback resource determining method according to an embodiment of this application;
FIG. 3 is a flowchart of a feedback resource determining method according to an embodiment of this application;
FIG. 4 is a schematic structural diagram 1 of a feedback resource determining apparatus according to an embodiment of this application;
FIG. 5 is a schematic structural diagram 2 of a feedback resource determining apparatus according to an embodiment of this application;
FIG. 6 is a schematic diagram of a hardware structure of a communication device according to an embodiment of this application;
FIG. 7 is a schematic diagram of a hardware structure of UE according to an embodiment of this application; and
FIG. 8 is a schematic diagram of a hardware structure of a network side device according to an embodiment of this application.

### DETAILED DESCRIPTION

Technical solutions in embodiments of this application are clearly and completely described in the following with reference to accompanying drawings in the embodiments of this application. Apparently, the described embodiments are merely some rather than all of the embodiments of this application. All other embodiments obtained by those of ordinary skill in the art based on the embodiments of this application fall within the scope of protection of this application.

Terms "first", "second", and the like in specification and claims of this application are used to distinguish similar objects instead of describing a specific order or sequence. It is to be understood that the terms used in this way are exchangeable in a proper case, so that the embodiments of this application can be implemented in a sequence other than sequences graphically shown or described here, and objects distinguished by "first" and "second" are usually of the same class without limiting a number of the objects, for example, a first object may be one or may be multiple. In addition, "and/or" in the specification and the claims represents at least one of the connected objects, and character "/" generally represents that contextual objects are in an "or" relationship.

It is worth noting that technologies described in this application are not limited to a long term evolution (Long Term Evolution, LTE)/evolution (LTE-Advanced, LTE-A) system of the LTE, and may alternatively be used for other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, and a single-carrier frequency division multiple access (Single-carrier Frequency Division Multiple Access, SC-FDMA), and other systems. Terms "system" and "network" in the embodiments of this application are often used interchangeably. The described technology can not only be used in the systems and radio technologies mentioned above, but also be used in other systems and radio technologies. The following description describes a new radio (New Radio, NR) system for a purpose of giving examples, and the term NR is used in most of the following descriptions. However, these technologies may alternatively be applied to applications other than an NR system application, for example, a 6^{th} generation (6^{th} Generation, 6G) communication system.

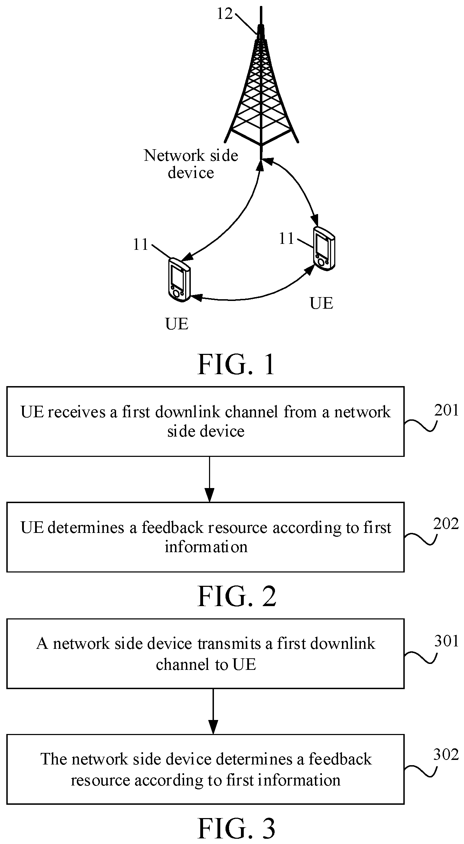

FIG. 1 is a block diagram of a wireless communication system to which the embodiments of this application are applicable. The wireless communication system includes UE11 and a network side device 12. The UE11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (PUE), a smart home device (a home device with a wireless communication function, such as a refrigerator, a television, a washing machine, or furniture), a game console, a personal computer (personal computer, PC), an automatic teller machine, or a self-service machine. The wearable device includes: a smart watch, a smart bracelet, a smart headphone, smart glasses, smart jewelry (a smart bracelet, a smart bracelet, a smart ring, a smart necklace, a smart anklet, a smart ankle chain, and the like), a smart wristband, smart clothing, and the like. It is to be noted that, a specific type of the UE11 is not limited in the embodiments of this application. The network side device 12 may include an access network device or a core network device. The access network device may alternatively be referred to as a Radio Access Network device, a radio access network (Radio Access Network, RAN), a radio access network function, or a radio access network unit. The access network device may include a base station, a WLAN access point, a WiFi node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmission reception point (Transmission Reception Point, TRP), or another appropriate term in the art. As long as the same technical effects are achieved, the base station is not limited to a specific technology vocabulary. It is to be noted that, In the embodiments of this application, only the base station in an NR system is taken as an example for introducing, and a specific type of the base station is not limited.

With reference to the accompanying drawings, the following describes a feedback resource determining method and apparatus, a communication device, a system, and a storage medium according to the embodiments of this application in detail through some embodiments and application scenarios thereof.

NR technology has evolved through two versions, Rel-15 and Rel-16, but neither version supports multicast/broadcast features. However, in many important usage scenarios, for example, in public safety and mission critical (that is, public safety and mission critical), vehicle to X (vehicle to X, V2X) applications, transparent IPv4/IPv6 multicast delivery (that is, transparent IPv4/IPv6 multicast delivery), an IPTV (that is, an interactive network television), software delivery over wireless (that is, software delivery over wireless), group communications and Internet of things applications (that is, group communications and IoT applications), the multicast/broadcast feature can provide substantial improvements, especially in terms of system efficiency and user experience. Therefore, in the following Rel-17 version, the broadcast/multicast features will be introduced in NR.

Currently, in multicast transmission of the NR, multicast service transmission in a point to multipoint (point to multipoint, ptm) mode is supported, and a physical downlink control channel (Physical downlink control channel, PDCCH) scrambled by a G-RNTI (that is, a group RNTI) schedules a physical downlink shared channel (physical downlink shared channel, PDSCH) scrambled by a G-RNTI to perform service scheduling and transmission. The PDCCH or the PDSCH scrambled by the G-RNTI may be simultaneously received by a group of terminals.

After receiving and decoding a PDSCH or a PDCCH (for example, a PDCCH indicating semi-persistent scheduling (Semi-Persistent Scheduling, SPS) PDSCH release) transmitted by a base station, the UE may feed back a decoding result of the PDSCH/PDCCH to the base station side to inform the base station whether the base station has successfully decoded the PDSCH/PDCCH. Therefore, after receiving the decoding result, the base station may make a next scheduling decision according to the decoding result. This process is referred to as HARQ. In multicast transmission, HARQ-ACK feedback modes include HARQ-ACK/NACK (that is, hybrid automatic repeat request acknowledge/negative acknowledge) and HARQ NACK ONLY. In the HARQ-ACK/NACK feedback mode, the UE feeds back an ACK in a case that the PDSCH/PDCCH is successfully decoded. The UE feeds back a NACK in a case that the PDSCH/PDCCH is not successfully decoded. In the HARQ NACK ONLY feedback mode, the UE does not feed back a NACK in a case that the PDSCH/PDCCH is successfully decoded, and feeds back NACK information in a case that the PDSCH/PDCCH is not successfully decoded.

In NR, a time unit (for example, a slot or a subslot) for feeding back a HARQ may be determined through k1 indicated by downlink control information (Downlink Control Information, DCI), where k1 represents a number of time units from a time unit where a PDSCH end position is located to a time unit for a HARQ feedback. For example, in a case that the UE receives a PDSCH in a time unit n, the UE feeds back corresponding HARQ information in a time unit n+k1. For different PDSCHs, k1 may take different values. The base station may configure a k1 set through radio resource control (Radio Resource Control, RRC) signaling first, and then indicate a specific value through DCI. If there is no k1 domain in the DCI, k1 is determined through a higher layer parameter.

The PUCCH is a main channel for carrying HARQ information. For the ACK/NACK feedback mode, a PUCCH of the ACK/NACK feedback mode is UE specific, that is, different UEs have different PUCCHs. For the NACK ONLY feedback mode, a PUCCH of the NACK ONLY feedback mode may be group common, that is, different UE may feed back NACK information of the same PDSCH on the same PUCCH.

In NR, for a dynamically scheduled unicast PDSCH or a dynamically scheduled multicast PDSCH with a feedback mode of HARQ-ACK/NACK, a PUCCH resource for HARQ-ACK feedback is determined by first determining a PUCCH resource set in a plurality of preconfigured PUCCH resource sets according to a number of HARQ-ACK bits fed back, and then determining, in the PUCCH set, a PUCCH resource index for transmitting a HARQ-ACK according to a PUCCH resource indicator (PUCCH resource indicator, PRI) in DCI and a control channel element index (Control Channel Element index, CCE index) for scheduling the PDSCH. For unicast feedback including only SPS PDSCH HARQ-ACK, in a case that the UE is not configured with a plurality of PUCCHs for feeding back the SPS PDSCH HARQ-ACK, that is, SPS-PUCCH-AN-List, the UE feeds back SPS HARQ-ACK on a preconfigured PUCCH (that is, a parameter n1PUCCH-AN configuration). In a case that the UE is configured with a plurality of PUCCHs for feeding back the SPS PDSCH HARQ-ACK, the UE determines, according to a number of HARQ-ACK bits fed back, a PUCCH resource from a plurality of PUCCH resources configured by the base station for feeding back the SPS PDSCH HARQ-ACK to transmit the SPS HARQ-ACK. For a HARQ-ACK of the dynamically scheduled multicast PDSCH, in a case that a feedback mode of the HARQ-ACK is NACK ONLY, the UE may determine, according to a mapping relationship between a bit state of the HARQ-ACK and a PUCCH resource, a PUCCH for feeding back the HARQ-ACK from a predefined table shown in Table 1 below.

**Table 1**

| HARQ-ACK information bit value | | | | PUCCH resource |
|---|---|---|---|---|
| {0} | {0.0} | {0,0,0} | {0,0,0,0} | 1^{st} PUCCH resource from resourceList |
| | {1,0} | {1,0,0} | {1,0,0,0} | 2^{nd} PUCCH resource from resourceList |
| | {0,1} | {0,1,0} | {0,1,0,0} | 3^{rd} PUCCH resource from resourceList |
| | | {1,1,0} | {1,1,0,0} | 4^{th} PUCCH resource from resourceList |
| | | {0,0,1} | {0,0,1,0} | 5^{th} PUCCH resource from resourceList |
| | | {1,0,1} | {1,0,1,0} | 6^{th} PUCCH resource from resourceList |
| | | {0,1,1} | {0,1,1,0} | 7^{th} PUCCH resource from resourceList |
| | | | {1,1,1,0} | 8^{th} PUCCH resource from resourceList |
| | | | {0,0,0,1} | 9^{th} PUCCH resource from resourceList |
| | | | {1,0,0,1} | 10^{th} PUCCH resource from resourceList |
| | | | {0,1,0,1} | 11^{th} PUCCH resource from resourceList |
| | | | {1,1,0,1} | 12^{th} PUCCH resource from resourceList |
| | | | {0,0,1,1} | 13^{th} PUCCH resource from resourceList |
| | | | {1,0,1,1} | 14^{th} PUCCH resource from resourceList |
| | | | {0,1,1,1} | 15^{th} PUCCH resource from resourceList |

However, according to the foregoing method, in the HARQ NACK ONLY feedback mode, the UE may only determine a PUCCH resource for feeding back a HARQ-ACK according to a predefined table, and the base station cannot flexibly indicate different feedback resources, resulting in a specific scheduling limitation. In addition, for NACK ONLY feedback of the multicast SPS PDSCH, a mode of determining a feedback resource is not clear. This causes a problem about effectiveness of determining the feedback resource.

To resolve the foregoing problem, in the feedback resource determining method according to the embodiments of this application, UE may receive a first downlink channel from a network side device, and may determine a feedback resource according to first information. The feedback resource is used for the UE to transmit feedback information of the first downlink channel. The first information indicates at least one of the following: a number of bits of the feedback information; a feedback mode of the feedback information; and a channel type of the first downlink channel. Through this solution, after receiving the first downlink channel from the network side device, the UE may determine, according to at least one of the number of bits of the feedback information, the feedback mode of the feedback information, and the channel type of the first downlink channel, the feedback resource for transmitting the feedback information of the first downlink channel. Therefore, for both the HARQ NACK ONLY feedback mode and the feedback mode including an SPS PDSCH, flexibility of determining the feedback resource can be improved.

An embodiment of this application provides a feedback resource determining method. FIG. 2 is a flowchart of a feedback resource determining method according to an embodiment of this application. As shown in FIG. 2, the feedback resource determining method according to the embodiments of this application may include the following step 201 and step 202.

Step 201: UE receives a first downlink channel from a network side device.

Optionally, in the embodiments of this application, the first downlink channel may include at least one PDSCH.

Step 202: The UE determines a feedback resource according to first information.

In the embodiments of this application, the foregoing feedback resource is used for the UE to transmit feedback information of the first downlink channel.

In the embodiments of this application, the first information includes at least one of the following:
(1.1) A number of bits of the foregoing feedback information;
(1.2) a feedback mode of the feedback information; and
(1.3) a channel type of the first downlink channel.

Optionally, in the embodiments of this application, the feedback mode of the foregoing feedback information may be a first mode or a second mode.

Optionally, in the embodiments of this application, the first mode (that is, mode1) may be: a feedback mode in which the UE performs feedback by converting the NACK ONLY into an ACK/NACK bit when transmitting a plurality of NACK ONLY feedbacks on one PUCCH; and the second mode (that is, mode2) may be: when the UE transmits a plurality of NACK ONLY feedbacks on one PUCCH, the UE transmits one specific sequence or PUCCH corresponding to a combination of the plurality of NACK ONLY feedbacks. For example, the UE transmits the plurality of NACK ONLY feedbacks through PUCCH resource selection.

Optionally, in the embodiments of this application, the channel type may be: a unicast dynamic scheduling type, a unicast semi-persistent scheduling type, a multicast dynamic scheduling type, a multicast semi-persistent scheduling type, or the like. The unicast dynamic scheduling type is a unicast PDSCH representing dynamic scheduling (for example, scheduled by a PDCCH scrambled by a C-RNTI), the unicast semi-persistent scheduling type is a unicast PDSCH representing semi-persistent scheduling (SPS) (for example, a PDSCH scrambled by a CS-RNTI), the multicast dynamic scheduling type is a multicast PDSCH representing dynamic scheduling (for example, scheduled by a PDCCH scrambled by a G-RNTI), and the multicast semi-persistent scheduling type represents a semi-persistent scheduled (SPS) is a multicast PDSCH representing semi-persistent scheduling (SPS) (for example, a PDSCH scrambled by a G-CS-RNTI).

A specific method for the UE to determine the feedback resource according to the first information will be described in detail in the following embodiments. To avoid repetition, details are not described herein again.

In the feedback resource determining method according to the embodiments of this application, after receiving the first downlink channel from the network side device, the UE may determine, according to at least one of the number of bits of the feedback information, the feedback mode of the feedback information, and the channel type of the first downlink channel, the feedback resource for transmitting the feedback information of the first downlink channel. Therefore, flexibility of determining the feedback resource can be improved.

Optionally, in the embodiments of this application, the first information includes: a number of bits of the foregoing feedback information, or a feedback mode of the feedback information. The foregoing step 202 may be specifically implemented through the following step 202a.

Step 202a: The UE determines a feedback resource according to the first information in a case that a feedback mode corresponding to a first downlink channel is a NACK ONLY feedback mode.

In the embodiments of this application, the foregoing feedback mode is a mode in which the UE transmits the foregoing feedback information.

Optionally, in the embodiments of this application, the foregoing feedback mode may include: a NACK ONLY feedback mode or an ACK/NACK feedback mode.

Optionally, in the embodiments of this application, the UE may determine the feedback resource by using a specific method in a related art in a case that the feedback mode corresponding to the first downlink channel is the ACK/NACK feedback mode.

For specific descriptions of the NACK ONLY feedback mode, the ACK/NACK feedback mode, and the feedback resource determining method corresponding to the ACK/NACK feedback mode, refer to related descriptions in the foregoing related art. To avoid repetition, details are not described herein again.

In the embodiments of this application, the UE may determine, according to at least one of the number of bits of the feedback information, the feedback mode of the feedback information, and the channel type of the first downlink channel, the feedback resource for transmitting the feedback information of the first downlink channel in a case that the feedback mode corresponding to the first downlink channel is the NACK ONLY feedback mode. Therefore, flexibility and effectiveness of determining the feedback resource in the NACK ONLY feedback mode can be improved.

The following describes a specific method for the UE to determine the feedback resource according to the first information in detail.

Optionally, in the embodiments of this application, the first information includes: a number of bits of the foregoing feedback information, or a feedback mode of the feedback information. The foregoing step 202 may be specifically implemented through the following step 202b or step 202c.

Step 202b: The UE determines a feedback resource according to an indication of DCI in a case that the first information meets a first condition.

Optionally, in the embodiments of this application, the foregoing DCI may be last DCI (that is, last DCI) corresponding to the first downlink channel.

Optionally, in the embodiments of this application, the first condition may include at least one of the following: the number of bits of the feedback information is 1; the feedback mode is configured as a first mode; and the feedback mode is not configured as a second mode.

Optionally, in the embodiments of this application, the foregoing feedback mode is not configured as the second mode, which may be understood as: a default mode of the feedback mode is the first mode, or the feedback mode is configured as the first mode.

Optionally, in the embodiments of this application, the foregoing feedback mode may be configured by using a higher layer parameter such as moreThanOneNackOnlyMode.

Step 202c: The UE determines a feedback resource according to the number of bits of the feedback information, the bit state of the feedback information, and the first mapping relationship in a case that the first information meets the second condition.

In the embodiments of this application, the first mapping relationship is: a mapping relationship between the number of bits of the foregoing feedback information, the bit state of the feedback information and the foregoing feedback resource.

Optionally, in the embodiments of this application, there may be a mapping relationship between a number of bits of each piece of feedback information, the bit state of the feedback information and one feedback resource.

Optionally, in the embodiments of this application, the UE may determine a feedback resource from Table 1 according to the foregoing mapping relationship.

Optionally, in the embodiments of this application, the second condition may include at least one of the following: the number of bits of the feedback information is greater than 1; the feedback mode is not configured as a first mode; and the feedback mode is configured as a second mode.

Optionally, in the embodiments of this application, the foregoing feedback mode is not configured as the first mode, which may be understood as: in a case that a default value of a higher layer parameter such as moreThanOneNackOnlyMode is the second mode, when the base station is configured with the parameter, it represents that the foregoing feedback mode is configured as the first mode, and when the base station is not configured with the parameter, it represents that the feedback mode is configured as the second mode, or the feedback mode is configured as the second mode.

In the embodiments of this application, the UE may determine the feedback resource according to the indication of the DCI in a case that the first information meets the first condition, and the UE may determine the feedback resource according to the number of bits of the feedback information, the bit state of the feedback information, and the first mapping relationship in a case that the first information meets the second condition. That is, when the first information meets different conditions, the UE may determine the feedback resource in different modes. Therefore, flexibility of determining the feedback resource can be further improved.

Optionally, in the embodiments of this application, the first information includes: a number of bits of the foregoing feedback information. The foregoing step 202 may be specifically implemented through the following step 202d.

Step 202d: The UE determines a feedback resource from a first resource subset according to the number of bits of the feedback information, the bit state of the feedback information, and the first mapping relationship.

In the embodiments of this application, the first resource subset is determined according to the DCI and/or a CCE index corresponding to the DCI.

In the embodiments of this application, the first mapping relationship is: a mapping relationship between the number of bits of the foregoing feedback information, the bit state of the feedback information and the foregoing feedback resource.

Optionally, in the embodiments of this application, the foregoing DCI may be DCI for scheduling/activating the foregoing first downlink channel (for example, a PDSCH), or DCI carried on the first downlink channel (for example, a PDCCH). Further, the DCI is last DCI corresponding to the first downlink channel, for example, last DCI obtained by sorting a plurality of pieces of DCI corresponding to the first downlink channel according to a specific rule (for example, a serving cell index, a CORESET pool index, or a PDCCH detection occasion).

Optionally, in the embodiments of this application, the feedback resources in a feedback resource (for example, PUCCH) set may be classified into different resource groups/subsets first, and then the UE may determine a first resource subset according to the DCI and/or the CCE index corresponding to the DCI, so that the UE may determine the foregoing feedback resource from the first resource subset according to the number of bits of the feedback information, the bit state of the feedback information, and the first mapping relationship.

For example, it is assumed that a number of feedback resources included in a feedback resource set (for example, a PUCCH resource set) is X, and the feedback resource set is classified into different groups. A number of feedback resources included in each group of feedback resources is Y or not less than Y. For example, in a case that X is an integer multiple of Y, each group includes exactly Y feedback resources. In a case that X is not an integer multiple of Y, each group of previous groups may include Y feedback resources, and a last group includes more than Y feedback resources, a number of classified feedback resource sets is X/Y or floor (X/Y), where Y is related to a number of HARQ-ACK bits. For example, (1) in a case that the number of 'HARQ-ACK bits is 1, Y=1; (2) in a case that the number of HARQ-ACK bits is 2, Y=3; (3) in a case that the number of HARQ-ACK bits is 3, Y=7; (4) in a case that the number of HARQ-ACK bits is 4, Y=15; and it is assumed that the foregoing X is 32, for the foregoing (1), Z is 32, for the foregoing (2), Z is 10, for the foregoing (3), Z is 4, and for the foregoing (4), Z is 2. Therefore, the UE may determine, according to a PRI in the Last DCI or the PRI and the indication of the CCE index, the first resource subset where the feedback resource is located, and determine the feedback resource from the first resource subset (for example, the determined subset in the following Table 2) through the following Table 2 according to the number of bits of the feedback information, the bit state of the feedback information, and the first mapping relationship.

**Table 2**

| HARQ-ACK information bit value | | | | PUCCH resource |
|---|---|---|---|---|
| {0} | {0,0} | {0,0,0} | {0,0,0,0} | 1^{st} PUCCH resource from the determined subset |
| | {1,0} | {1,0,0} | {1,0,0,0} | 2^{nd} PUCCH resource from the determined subset |
| | {0,1} | {0,1,0} | {0,1,0,0} | 3^{rd} PUCCH resource from the determined subset |
| | | {1,1,0} | {1,1,0,0} | 4^{th} PUCCH resource from the determined subset |
| | | {0,0,1} | {0,0,1,0} | 5^{th} PUCCH resource from the determined subset |
| | | {1,0,1} | {1,0,1,0} | 6^{th} PUCCH resource from the determined subset |
| | | {0,1,1} | {0,1,1,0} | 7^{th} PUCCH resource from the determined subset |
| | | | {1,1,1,0} | 8^{th} PUCCH resource from the determined subset |
| | | | {0,0,0,1} | 9^{th} PUCCH resource from the determined subset |
| | | | {1,0,0,1} | 10^{th} PUCCH resource from the determined subset |
| | | | {0,1,0,1} | 11^{th} PUCCH resource from the determined subset |
| | | | {1,1,0,1} | 12^{th} PUCCH resource from the determined subset |
| | | | {0,0,1,1} | 13^{th} PUCCH resource from the determined subset |
| | | | {1,0,1,1} | 14^{th} PUCCH resource from the determined subset |
| | | | {0,1,1,1} | 15^{th} PUCCH resource from the determined subset |

In the embodiments of this application, when the first information includes the number of bits of the foregoing feedback information, the UE may determine the foregoing feedback resource from the first resource subset according to the number of bits of the feedback information, the bit state of the feedback information, and the first mapping relationship. Therefore, the UE can be prevented from determining the feedback resource from all feedback resources, thereby reducing power consumption of the UE and simplifying a process of determining the feedback resource.

For the NACK ONLY feedback mode, an example in which the foregoing feedback resource is a PUCCH resource is taken. The PUCCH resource is configured by using a parameter pucch-ConfigurationListMulticast2. The pucch-ConfigurationListMulticast2 may be configured with at most two PUCCH-configs. In a case that the pucch-ConfigurationListMulticast2 is configured with two PUCCH-configs, a first PUCCH-config and a second PUCCH-config are respectively configured with HARQ-ACK feedback for feeding back priority indexes of 0 and 1. One PUCCH resource set may be configured in each PUCCH-config, at most 32 PUCCH resources may be configured in the resource set, and a format of each PUCCH resource is a PUCCH format 0 or a format 1. An existing resource determining method according to a PRI is only applicable to ACK/NACK feedback, and cannot be applied to NACK ONLY multi-bit feedback (in this case, there are a plurality of states, each state corresponds to different PUCCHs, and UE needs to determine a PUCCH resource for feeding back according to a bit state of HARQ-ACK feedback. In a case that the PUCCH resource is determined only according to the PRI, the base station cannot know the bit state of the HARQ-ACK feedback). Meanwhile, the base station cannot flexibly indicate a PUCCH resource for the UE to feed back a HARQ-ACK only according to a table (for example, Table 1 above) determined by existing resources. Therefore, the foregoing problem can be avoided by using the foregoing step 202d to determine the foregoing feedback resource, thereby increasing flexibility and effectiveness of a communication system.

Optionally, in the embodiments of this application, the first information includes: a channel type of the first downlink channel. The foregoing step 202 may be specifically implemented through the following step 202e or step 202f.

Step 202e: The UE determines a feedback resource according to the second information in a case that the channel type of the first downlink channel meets a third condition.

Optionally, in the embodiments of this application, the third condition may include any one of the following:
(2.1) the channel type includes a unicast semi-persistent scheduling type;
(2.2) the channel type includes a multicast semi-persistent scheduling type, and a feedback mode corresponding to at least one semi-persistent scheduling downlink channel in the multicast semi-persistent scheduling downlink channel is an ACK/NACK mode; and
(2.3) the channel type includes a unicast semi-persistent scheduling type and a multicast semi-persistent scheduling type.

In the embodiments of this application, the second information includes: a first resource for semi-persistent downlink channel feedback; and a second resource for semi-persistent downlink channel feedback.

Optionally, in the embodiments of this application, when the first downlink channel is a PDSCH of a unicast semi-persistent scheduling type (that is, SPS), the unicast SPS PDSCH may include any one of the following:
an SPS PDSCH activated by a PDCCH scrambled by a CS-RNTI;
PDSCH scrambled by CS-RNTI; and
an SPS PDSCH configured by SPS-config or sps-ConfigToAddModList in BWP-DownlinkDedicated IE.

In the embodiments of this application, the third condition may include any one of the foregoing (2.1), (2.2), and (2.3), and the second information may indicate: a first resource for semi-persistent downlink channel feedback; and a second resource for semi-persistent downlink channel feedback; Therefore, the UE may determine the feedback resource according to the second information in a case that the channel type of the first downlink channel meets different third conditions. Therefore, flexibility of determining the feedback resource can be further improved.

Optionally, in the embodiments of this application, the foregoing step 202e may be specifically implemented through the following step 202e1 or step 202e2.

Step 202e1: In a case that the channel type of the first downlink channel meets a third condition, the UE determines the second resource for semi-persistent downlink channel feedback as a feedback resource in a case that the UE is not configured with the first resource for semi-persistent downlink channel feedback.

Optionally, in the embodiments of this application, the first resource for semi-persistent downlink channel feedback may include at least one feedback resource.

Step 202e2: In a case that the channel type of the first downlink channel meets a third condition, the UE determines a feedback resource from the first resource for semi-persistent downlink channel feedback according to a number of bits of feedback information in a case that the UE is configured with the first resource for semi-persistent downlink channel feedback.

Optionally, in the embodiments of this application, the first resource for semi-persistent downlink channel feedback may be configured through a configuration parameter SPS-PUCCH-AN-List.

Optionally, in the embodiments of this application, the second resource for semi-persistent downlink channel feedback may be configured through a configuration parameter n1PUCCH-AN.

Optionally, in the embodiments of this application, in a case that the third condition includes the foregoing (2.1), the SPS-PUCCH-AN-List and the n1PUCCH-AN may be configured in a PUCCH-config corresponding to unicast (that is, unicast). In a case that the third condition includes the foregoing (2.2), the SPS-PUCCH-AN-List and the n1PUCCH-AN may be configured in a PUCCH-config corresponding to the ACK/NACK feedback mode or a PUCCH-config corresponding to unicast. The PUCCH-config corresponding to the ACK/NACK feedback mode may be configured by using a parameter pucch-ConfigurationListMulticast1.

In the embodiments of this application, in a case that the channel type of the first downlink channel meets the third condition, the UE may determine the second resource for semi-persistent downlink channel feedback as the feedback resource according to whether the first resource for semi-persistent downlink channel feedback is configured, or the UE determines a feedback resource from the first resource for semi-persistent downlink channel feedback according to a number of bits of feedback information. Therefore, flexibility of determining the feedback resource can be further improved.

Step 202f: The UE determines a feedback resource according to the third information in a case that the channel type of the first downlink channel meets a fourth condition.

Optionally, in the embodiments of this application, the fourth condition may include: the channel type only includes a multicast semi-persistent scheduling type, and a feedback mode corresponding to the multicast semi-persistent scheduling downlink channel is a NACK ONLY mode.

Optionally, in the embodiments of this application, the third information may include at least one of the following:
(3.1) a number of bits of the foregoing feedback information, a bit state of the feedback information, and a first mapping relationship;
(3.2) a feedback mode of the feedback information;
(3.3) a first resource for semi-persistent downlink channel feedback; and
(3.4) a second resource for semi-persistent downlink channel feedback.

The first mapping relationship is: a mapping relationship between the number of bits of the foregoing feedback information, the bit state of the feedback information and the foregoing feedback resource.

Optionally, in the embodiments of this application, in a case that the first downlink channel is a PDSCH in a multicast semi-persistent scheduling type, the multicast SPS PDSCH may include any one of the following:
an SPS PDSCH activated by a PDCCH scrambled by a G-CS-RNTI;
a PDSCH scrambled by a G-CS-RNTI; and
an SPS PDSCH configured by sps-ConfigMulticastToAddModList in CFR-ConfigMulticast IE.

In the embodiments of this application, the fourth condition may include: the channel type only includes a multicast semi-persistent scheduling type, and a feedback mode corresponding to the multicast semi-persistent scheduling downlink channel is a NACK ONLY mode; and the third information may include any one of the foregoing (3.1), (3.2), and (3.3). Therefore, in a case that the channel type of the first downlink channel meets the fourth condition, the UE determines the foregoing feedback resource according to different third information. Therefore, flexibility of determining the feedback resource can be further improved.

Optionally, in the embodiments of this application, the third information includes: a number of bits of the foregoing feedback information, a bit state of the feedback information, and a first mapping relationship. The foregoing step 202f may be specifically implemented through the following step 202f1.

Step 202f1: The UE determines a feedback resource according to the number of bits of the feedback information, the bit state of the feedback information, and the first mapping relationship in a case that the channel type of the first downlink channel meets a fourth condition.

In the embodiments of this application, the UE may determine the foregoing feedback resource according to the number of bits of the foregoing feedback information, the bit state of the feedback information, and the first mapping relationship in a case that the channel type of the first downlink channel meets the fourth condition. Therefore, modes of determining the feedback resource can be enriched, and flexibility of determining the feedback resource can be improved.

Optionally, in the embodiments of this application, the foregoing step 202f may be specifically implemented through the following step 202f2 or step 202f3.

Step 202f2: In a case that the channel type of the first downlink channel meets the fourth condition, the UE determines a feedback resource according to the number of bits of the feedback information, the bit state of the feedback information, and the first mapping relationship in a case that the feedback mode is configured as a second mode.

Step 202f3: In a case that the channel type of the first downlink channel meets a fourth condition, the UE determines a feedback resource according to the first resource for semi-persistent downlink channel feedback or the second resource for semi-persistent downlink channel feedback in a case that the feedback mode is not configured as the second mode.

In the embodiments of this application, in a case that the channel type of the first downlink channel meets the fourth condition, the UE may determine the foregoing feedback resource according to different methods based on whether the feedback mode is configured as the second mode. Therefore, modes of determining the feedback resource can be further enriched, and flexibility of determining the feedback resource can be improved.

Optionally, in the embodiments of this application, the third information includes: a first resource for semi-persistent downlink channel feedback and a second resource for semi-persistent downlink channel feedback. The foregoing step 202f may be specifically implemented through the following step 202f4 or step 202f5.

Step 202f4: In a case that the channel type of the first downlink channel meets the fourth condition, the UE determines the second resource for semi-persistent downlink channel feedback as a feedback resource in a case that the UE is not configured with the first resource for semi-persistent downlink channel feedback.

Step 202f5: In a case that the channel type of the first downlink channel meets the fourth condition, the UE determines the feedback resource from the first resource for semi-persistent downlink channel feedback according to the number of bits of the feedback information in a case that the UE is configured with the first resource for semi-persistent downlink channel feedback.

Optionally, in the embodiments of this application, the foregoing SPS-PUCCH-AN-List and n1PUCCH-AN may be configured in a PUCCH-config corresponding to a NACK-only feedback mode. The PUCCH-config corresponding to the NACK-only feedback mode may be configured by using a parameter pucch-ConfigurationListMulticast2.

In the embodiments of this application, in a case that the channel type of the first downlink channel meets the fourth condition, the UE may determine the second resource for semi-persistent downlink channel feedback as the foregoing feedback resource according to whether the first resource for semi-persistent downlink channel feedback is configured, or determine the feedback resource from the first resource for semi-persistent downlink channel feedback according to a number of bits of feedback information. Therefore, modes of determining the feedback resource can be further enriched, and flexibility of determining the feedback resource can be improved.

For a specific method for the UE to determine the feedback resource according to different third information, refer to related descriptions in the foregoing embodiments. To avoid repetition, details are not described herein again.

In the embodiments of this application, in a case that the channel type of the first downlink channel meets the third condition, the UE may determine the foregoing feedback resource according to the second information. Or, in a case that the channel type of the first downlink channel meets the fourth condition, the UE may determine the feedback resource according to the third information, that is, in a case that the channel type of the first downlink channel meets different conditions, the UE may determine the feedback resource according to different information. Therefore, flexibility of determining the feedback resource can be further improved.

An embodiment of this application provides a feedback resource determining method. FIG. 3 is a flowchart of a feedback resource determining method according to an embodiment of this application. As shown in FIG. 3, the feedback resource determining method according to the embodiments of this application may include the following step 301 and step 302.

Step 301: A network side device transmits a first downlink channel to UE.

Step 302: The network side device determines a feedback resource according to first information.

In the embodiments of this application, the foregoing feedback resource is used for the network side device to receive feedback information of the first downlink channel.

In the embodiments of this application, the first information includes at least one of the following:
a number of bits of the foregoing feedback information;
a feedback mode of the feedback information; and
a channel type of the first downlink channel.

Optionally, in the embodiments of this application, the first information includes: a number of bits of the foregoing feedback information, or a feedback mode of the feedback information. The foregoing step 302 may be specifically implemented through the following step 302a.

Step 302a: The network side device determines a feedback resource according to first information in a case that a feedback mode corresponding to a first downlink channel is a NACK ONLY feedback mode.

In the embodiments of this application, the foregoing feedback mode is a mode in which the UE transmits the foregoing feedback information.

Optionally, in the embodiments of this application, the first information includes: a number of bits of the foregoing feedback information, or a feedback mode of the feedback information. The foregoing step 302 may be specifically implemented through the following step 302b or step 302c.

Step 302b: The network side device configures a feedback resource in a case that the first information meets a first condition.

Optionally, in the embodiments of this application, the first condition may include at least one of the following: the number of bits of the feedback information is 1; the feedback mode is configured as a first mode; and the feedback mode is not configured as a second mode.

Step 302c: The network side device determines a feedback resource according to the number of bits of the feedback information, the bit state of the feedback information, and a first mapping relationship in a case that the first information meets a second condition.

In the embodiments of this application, the first mapping relationship is: a mapping relationship between the number of bits of the foregoing feedback information, the bit state of the feedback information and the foregoing feedback resource.

Optionally, in the embodiments of this application, the second condition may include at least one of the following: the number of bits of the feedback information is greater than 1; the feedback mode is not configured as a first mode; and the feedback mode is configured as a second mode.

Optionally, in the embodiments of this application, the first information includes: a number of bits of the foregoing feedback information. The foregoing step 302 may be specifically implemented through the following step 302d.

Step 302d: The network side device determines a feedback resource from a first resource subset according to the number of bits of the feedback information, the bit state of the feedback information, and the first mapping relationship.

In the embodiments of this application, the first resource subset is a resource set configured by the network side device.

In the embodiments of this application, the first mapping relationship is: a mapping relationship between the number of bits of the foregoing feedback information,, the bit state of the feedback information and the foregoing feedback resource.

Optionally, in the embodiments of this application, the first information includes: a channel type of the first downlink channel. The foregoing step 302 may be specifically implemented through the following step 302e or step 302f.

Step 302e: The network side device determines a feedback resource according to second information in a case that the channel type of the first downlink channel meets a third condition.

Optionally, in the embodiments of this application, the third condition may include any one of the following:
the channel type includes a unicast semi-persistent scheduling type;
the channel type includes a multicast semi-persistent scheduling type, and a feedback mode corresponding to at least one semi-persistent scheduling downlink channel in the multicast semi-persistent scheduling downlink channel is an ACK/NACK mode; and
the channel type includes a unicast semi-persistent scheduling type and a multicast semi-persistent scheduling type.

Optionally, in the embodiments of this application, the second information includes: a first resource for semi-persistent downlink channel feedback; and a second resource for semi-persistent downlink channel feedback.

Optionally, in the embodiments of this application, the foregoing step 302e may be specifically implemented through the following step 302e1 or step 302e2.

Step 302e1: In a case that the channel type of the first downlink channel meets a third condition, the network side device determines the second resource for semi-persistent downlink channel feedback as a feedback resource in a case that the first resource for semi-persistent downlink channel feedback is not configured for the UE.

Step 302e2: In a case that the channel type of the first downlink channel meets a third condition, the network side device determines a feedback resource from the first resource for semi-persistent downlink channel feedback according to a number of bits of feedback information in a case that the first resource for semi-persistent downlink channel feedback is configured for the UE.

Step 302f: The network side device determines a feedback resource according to third information in a case that the channel type of the first downlink channel meets a fourth condition.

Optionally, in the embodiments of this application, the fourth condition may include: the channel type only includes a multicast semi-persistent scheduling type, and a feedback mode corresponding to the multicast semi-persistent scheduling downlink channel is a NACK ONLY mode.

Optionally, in the embodiments of this application, the third information may include at least one of the following:
a number of bits of the foregoing feedback information, a bit state of the feedback information, and a first mapping relationship;
a feedback mode of the feedback information;
a first resource for semi-persistent downlink channel feedback; and
a second resource for semi-persistent downlink channel feedback.

The first mapping relationship is: a mapping relationship between the number of bits of the foregoing feedback information, the bit state of the feedback information and the foregoing feedback resource.

Optionally, in the embodiments of this application, the third information includes: a number of bits of the foregoing feedback information, a bit state of the feedback information, and a first mapping relationship. The foregoing step 302f may be specifically implemented through the following step 302f1.

Step 302f1: The network side device determines a feedback resource according to the number of bits of the feedback information, the bit state of the feedback information, and the first mapping relationship in a case that the channel type of the first downlink channel meets the fourth condition.

Optionally, in the embodiments of this application, the foregoing step 302f may be specifically implemented through the following step 302f2 or step 302f3.

Step 302f2: In a case that the channel type of the first downlink channel meets a fourth condition, the network side device determines a feedback resource according to the number of bits of the feedback information, the bit state of the feedback information, and the first mapping relationship in a case that the feedback mode is configured as a second mode.

Step 302f3: In a case that the channel type of the first downlink channel meets a fourth condition, the network side device determines a feedback resource according to the first resource for semi-persistent downlink channel feedback or the second resource for semi-persistent downlink channel feedback in a case that the feedback mode is not configured as the second mode.

Optionally, in the embodiments of this application, the third information includes: a first resource for semi-persistent downlink channel feedback and a second resource for semi-persistent downlink channel feedback. The foregoing step 302f may be specifically implemented through the following step 302f4 or step 302f5.

Step 302f4: In a case that the channel type of the first downlink channel meets a fourth condition, the network side device determines the second resource for semi-persistent downlink channel feedback as a feedback resource in a case that the first resource for semi-persistent downlink channel feedback is not configured for the UE.

Step 302f5: In a case that the channel type of the first downlink channel meets a fourth condition, the network side device determines a feedback resource from the first resource for semi-persistent downlink channel feedback according to a number of bits of feedback information in a case that the first resource for semi-persistent downlink channel feedback is configured for the UE.

**In** the feedback resource determining method according to the embodiments of this application, after transmitting the first downlink channel to the UE, the network side device may determine, according to at least one of the number of bits of the feedback information, the feedback mode of the feedback information, and the channel type of the first downlink channel, the feedback resource for transmitting the feedback information of the first downlink channel. Therefore, flexibility of determining the feedback resource can be improved.

For specific descriptions in the embodiments of this application and technical effects that can be achieved by various technical features, refer to related descriptions in the foregoing UE-side method embodiment. To avoid repetition, details are not described herein again.

The feedback resource determining method according to the embodiments of this application may be performed by a feedback resource determining apparatus. In the embodiments of this application, the feedback resource determining apparatus according to the embodiments of this application is described by taking an example in which the feedback resource determining apparatus performs the feedback resource determining method.

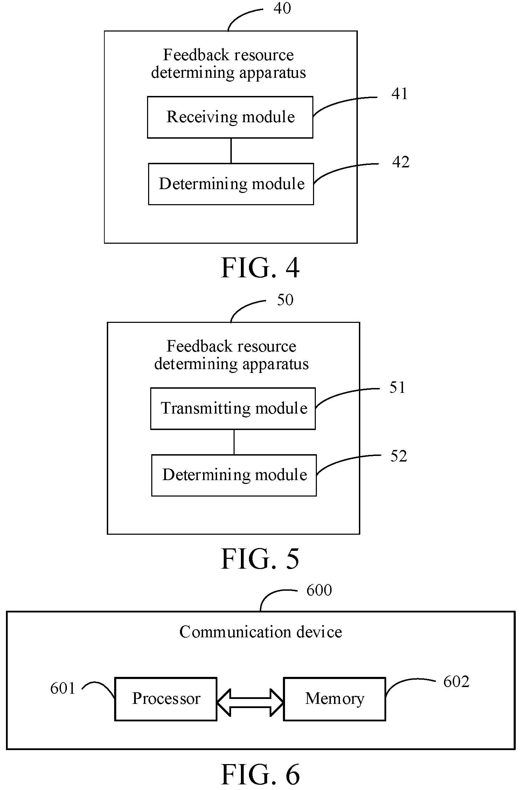

With reference to FIG. 4, an embodiment of this application provides a feedback resource determining apparatus 40. The feedback resource determining apparatus 40 may include a receiving module 41 and a determining module 42. The first receiving module 41 may be configured to receive a first downlink channel from a network side device. The determining module 42 may be configured to determine a feedback resource according to first information, where the feedback resource is used for the UE to transmit feedback information of the first downlink channel. The first information includes at least one of the following: a number of bits of the feedback information; a feedback mode of the feedback information; and a channel type of the first downlink channel.

In a possible implementation, the first information includes: a number of bits of the feedback information, or a feedback mode of the feedback information. The determining module 42 may be specifically configured to: determine the foregoing feedback resource according to indication of DCI in a case that the first information meets a first condition; or, determine the feedback resource according to the number of bits of the feedback information, a bit state of the feedback information, and a first mapping relationship in a case that the first information meets a second condition. The first mapping relationship is: a mapping relationship between the number of bits of the feedback information, the bit state of the feedback information and the feedback resource.

In an implementation, the first condition includes at least one of the following: the number of bits of the feedback information is 1; the feedback mode is configured as a first mode; and the feedback mode is not configured as a second mode. and/or, the second condition includes at least one of the following: the number of bits of the feedback information is greater than 1; the feedback mode is not configured as a first mode; and the feedback mode is configured as a second mode.

In a possible implementation, the first information includes: a number of bits of the feedback information. The determining module 42 may be specifically configured to determine the foregoing feedback resource from a first resource subset according to the number of bits of the feedback information, the bit state of the feedback information, and the first mapping relationship. The first resource subset is determined according to DCI and/or a CCE index corresponding to the DCI. The first mapping relationship is: a mapping relationship between the number of bits of the feedback information, the bit state of the feedback information and the feedback resource.

In a possible implementation, the first information includes: a number of bits of the feedback information, or a feedback mode of the feedback information. The determining module 42 may be specifically configured to determine the foregoing feedback resource according to the first information in a case that the feedback mode corresponding to a first downlink channel is a NACK ONLY feedback mode. The feedback mode is a mode in which the feedback resource determining apparatus 40 transmits the foregoing feedback information.

In a possible implementation, the first information includes: a channel type of the first downlink channel. The determining module 42 may be specifically configured to: determine the foregoing feedback resource according to second information in a case that the channel type of the first downlink channel meets a third condition; or, determine the feedback resource according to the third information in a case that the channel type of the first downlink channel meets a fourth condition.

In a possible implementation, the third condition may include at least one of the following: the channel type includes a unicast semi-persistent scheduling type; the channel type includes a multicast semi-persistent scheduling type, and a feedback mode corresponding to at least one semi-persistent scheduling downlink channel in the multicast semi-persistent scheduling downlink channel is an ACK/NACK mode; and the channel type includes a unicast semi-persistent scheduling type and a multicast semi-persistent scheduling type. The second information includes: a first resource for semi-persistent downlink channel feedback; and a second resource for semi-persistent downlink channel feedback.

In a possible implementation, the determining module 42 may be specifically configured to: determine the second resource for semi-persistent downlink channel feedback as the foregoing feedback resource in a case that the feedback resource determining apparatus 40 is not configured with the first resource for semi-persistent downlink channel feedback; or, determine the feedback resource from the first resource for semi-persistent downlink channel feedback according to the number of bits of the feedback information in a case that the feedback resource determining apparatus 40 is configured with the first resource for semi-persistent downlink channel feedback.

In a possible implementation, the fourth condition may include: the channel type only includes a multicast semi-persistent scheduling type, and a feedback mode corresponding to the multicast semi-persistent scheduling downlink channel is a NACK ONLY mode. The third information includes at least one of the following: a number of bits of the feedback information, a bit state of the feedback information, and a first mapping relationship; a feedback mode of the feedback information; a first resource for semi-persistent downlink channel feedback; and a second resource for semi-persistent downlink channel feedback. The first mapping relationship is: a mapping relationship between the number of bits of the feedback information, the bit state of the feedback information and the feedback resource.

In a possible implementation, the third information includes: a number of bits of the feedback information, a bit state of the feedback information, and a first mapping relationship. The determining module 42 may be specifically configured to determine the foregoing feedback resource according to the number of bits of the feedback information, the bit state of the feedback information, and the first mapping relationship.

In a possible implementation, the determining module 42 may be specifically configured to: determine the foregoing feedback resource according to the number of bits of the feedback information, the bit state of the feedback information, and the first mapping relationship in a case that the feedback mode is configured as a second mode; or, determine the feedback resource according to the first resource for semi-persistent downlink channel feedback or the second resource for semi-persistent downlink channel feedback in a case that the feedback mode is not configured as the second mode.

In a possible implementation, the third information includes: a first resource for semi-persistent downlink channel feedback and a second resource for semi-persistent downlink channel feedback. The determining module 42 may be specifically configured to: determine the second resource for semi-persistent downlink channel feedback as the foregoing feedback resource in a case that the feedback resource determining apparatus 40 is not configured with the first resource for semi-persistent downlink channel feedback; or, determine the feedback resource from the first resource for semi-persistent downlink channel feedback according to the number of bits of the feedback information in a case that the feedback resource determining apparatus 40 is configured with the first resource for semi-persistent downlink channel feedback.

In the feedback resource determining apparatus according to the embodiments of this application, after receiving the first downlink channel from the network side device, the feedback resource determining apparatus may determine, according to at least one of the number of bits of the feedback information, the feedback mode of the feedback information, and the channel type of the first downlink channel, the feedback resource for transmitting the feedback information of the first downlink channel. Therefore, flexibility of determining the feedback resource can be improved.

The feedback resource determining apparatus in the embodiments of this application may be an electronic device, for example, an electronic device with an operating system, or a part in an electronic device, for example, an integrated circuit or a chip. For example, the electronic device may be UE, and the UE may include, but is not limited to, types of UE11 listed above. This is not specifically limited in the embodiments of this application.

The feedback resource determining apparatus according to the embodiments of this application can implement various processes implemented by the foregoing UE side embodiments, and the same technical effects can be achieved. To avoid repetition, details are not described herein again.

With reference to FIG. 5, an embodiment of this application provides a feedback resource determining apparatus 50. The feedback resource determining apparatus 50 may include a transmitting module 51 and a determining module 52. The transmitting module 51 may be further configured to transmit a first downlink channel to UE. The determining module 52 may be configured to determine a feedback resource according to first information. The feedback resource is used for the feedback resource determining apparatus 50 to receive feedback information of the first downlink channel. The first information includes at least one of the following: a number of bits of the feedback information; a feedback mode of the feedback information; and a channel type of the first downlink channel.

In a possible implementation, the first information includes: a number of bits of the feedback information, or a feedback mode of the feedback information. The determining module 52 may be specifically configured to: configure the foregoing feedback resource in a case that the first information meets a first condition; or, determine the feedback resource according to the number of bits of the feedback information, a bit state of the feedback information, and a first mapping relationship in a case that the first information meets a second condition. The first mapping relationship is: a mapping relationship between the number of bits of the feedback information. the bit state of the feedback information and the feedback resource.

In an implementation, the first condition includes at least one of the following: the number of bits of the feedback information is 1; the feedback mode is configured as a first mode; and the feedback mode is not configured as a second mode. and/or, the second condition includes at least one of the following: the number of bits of the feedback information is greater than 1; the feedback mode is not configured as a first mode; and the feedback mode is configured as a second mode.

In a possible implementation, the first information includes: a number of bits of the feedback information. The determining module 52 may be specifically configured to determine the foregoing feedback resource from a first resource subset according to the number of bits of the feedback information, the bit state of the feedback information, and the first mapping relationship. The first resource subset is configured by the feedback resource determining apparatus 50. The first mapping relationship is: a mapping relationship between the number of bits of the feedback information, the bit state of the feedback information and the feedback resource.

In a possible implementation, the first information includes: a number of bits of the feedback information, or a feedback mode of the feedback information. The determining module 52 may be specifically configured to determine the foregoing feedback resource according to the first information in a case that the feedback mode corresponding to a first downlink channel is a NACK ONLY feedback mode. The feedback mode is a mode in which the UE transmits the feedback information.

In a possible implementation, the first information includes: a channel type of the first downlink channel. The determining module 52 may be specifically configured to: determine the foregoing feedback resource according to second information in a case that the channel type of the first downlink channel meets a third condition; or, determine the feedback resource according to the third information in a case that the channel type of the first downlink channel meets a fourth condition.

In a possible implementation, the third condition may include at least one of the following: the channel type includes a unicast semi-persistent scheduling type; the channel type includes a multicast semi-persistent scheduling type, and a feedback mode corresponding to at least one semi-persistent scheduling downlink channel in the multicast semi-persistent scheduling downlink channel is an ACK/NACK mode; and the channel type includes a unicast semi-persistent scheduling type and a multicast semi-persistent scheduling type. The second information includes: a first resource for semi-persistent downlink channel feedback; and a second resource for semi-persistent downlink channel feedback.

In a possible implementation, the determining module 52 may be specifically configured to: determine the second resource for semi-persistent downlink channel feedback as the foregoing feedback resource in a case that the first resource for semi-persistent downlink channel feedback is not configured for the UE; or, determine the feedback resource from the first resource for semi-persistent downlink channel feedback according to a number of bits of feedback information in a case that the first resource for semi-persistent downlink channel feedback is configured for the UE.

In a possible implementation, the fourth condition may include: the channel type only includes a multicast semi-persistent scheduling type, and a feedback mode corresponding to the multicast semi-persistent scheduling downlink channel is a NACK ONLY mode. The third information includes at least one of the following: a number of bits of the feedback information, a bit state of the feedback information, and a first mapping relationship; a feedback mode of the feedback information; a first resource for semi-persistent downlink channel feedback; and a second resource for semi-persistent downlink channel feedback. The first mapping relationship is: a mapping relationship between the number of bits of the feedback information, the bit state of the feedback information and the feedback resource.

In a possible implementation, the third information includes: a number of bits of the feedback information, a bit state of the feedback information, and a first mapping relationship. The determining module 52 may be specifically configured to determine the foregoing feedback resource according to the number of bits of the feedback information, the bit state of the feedback information, and the first mapping relationship.

In a possible implementation, the determining module 52 may be specifically configured to: determine the foregoing feedback resource according to the number of bits of the feedback information, the bit state of the feedback information, and the first mapping relationship in a case that the feedback mode is configured as a second mode; or, determine the feedback resource according to the first resource for semi-persistent downlink channel feedback or the second resource for semi-persistent downlink channel feedback in a case that the feedback mode is not configured as the second mode.

In a possible implementation, the third information includes: a first resource for semi-persistent downlink channel feedback and a second resource for semi-persistent downlink channel feedback. The determining module 52 may be specifically configured to: determine the second resource for semi-persistent downlink channel feedback as the foregoing feedback resource in a case that the first resource for semi-persistent downlink channel feedback is not configured for the UE; or, determine the feedback resource from the first resource for semi-persistent downlink channel feedback according to a number of bits of feedback information in a case that the first resource for semi-persistent downlink channel feedback is configured for the UE.

In the feedback resource determining apparatus according to the embodiments of this application, after transmitting the first downlink channel to the UE, the feedback resource determining apparatus may determine, according to at least one of the number of bits of the feedback information, the feedback mode of the feedback information, and the channel type of the first downlink channel, the feedback resource for transmitting the feedback information of the first downlink channel. Therefore, flexibility of determining the feedback resource can be improved.

The feedback resource determining apparatus in the embodiments of this application may be an electronic device, for example, an electronic device with an operating system, or a part in an electronic device, for example, an integrated circuit or a chip. For example, the electronic device may be another device other than UE, and the another device may be a server, a network attached storage (Network Attached Storage, NAS), or the like. This is not specifically limited in this embodiment of this application.

The feedback resource determining apparatus according to the embodiments of this application can implement various processes implemented by the foregoing network side device embodiments, and the same technical effects can be achieved. To avoid repetition, details are not described herein again.

Optionally, as shown in FIG. 6, an embodiment of this application further provides a communication device 600, including a processor 601 and a memory 602. The memory 602 stores a program or instructions executable by the processor 601, for example, when the communication device 600 is UE, the program or instructions implement various steps of the foregoing UE side method when executed by the processor 601, and the same technical effects can be achieved. When the communication device 600 is a network side device, the program or instructions implement various steps of the foregoing network side device method when executed by the processor 601 and can achieve the same technical effects. To avoid repetition, details are not described herein again.

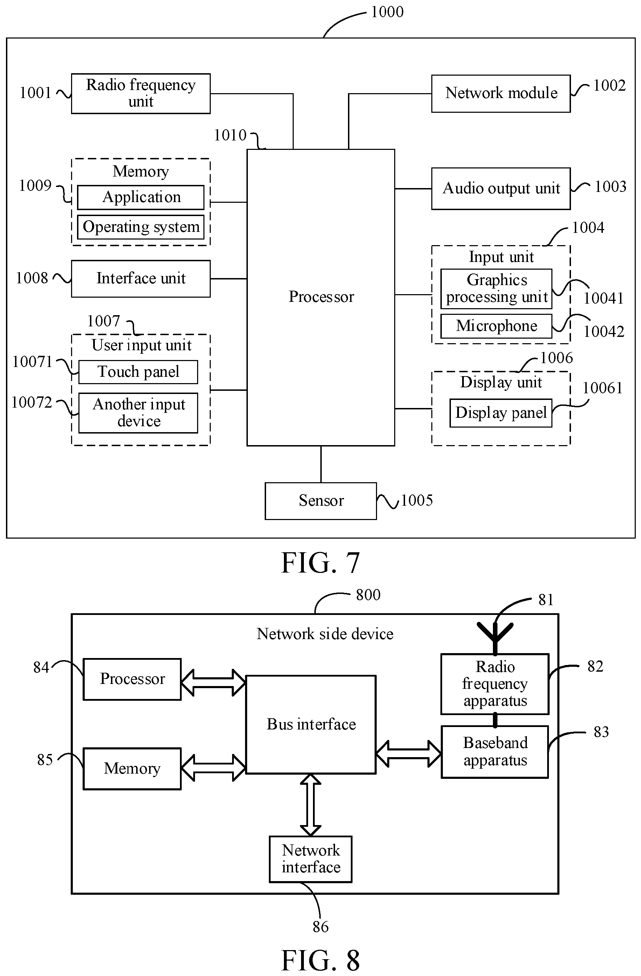

An embodiment of this application further provides UE, including a processor and a communication interface. The communication interface is configured to receive a first downlink channel from a network side device. The processor is configured to determine a feedback resource according to first information. The feedback resource is used for the UE to transmit feedback information of the first downlink channel. The first information includes at least one of the following: a number of bits of the feedback information; a feedback mode of the feedback information; and a channel type of the first downlink channel. The UE embodiment corresponds to the foregoing UE side method embodiment. Various implementation processes and implementations of the foregoing method embodiments are all applicable to the UE embodiment, and the same technical effects can be achieved. Specifically, FIG. 7 is a schematic diagram of a hardware structure of UE that implements the embodiments of this application.

The UE1000 includes, but is not limited to: at least part components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Those skilled in the art may understand that the UE1000 may further include a power supply (for example, a battery) for supplying power to various components. The power supply may be logically connected to the processor 1010 through a power management system, thereby realizing functions such as charging management, discharging management, and power consumption management through the power management system. A UE structure shown in FIG. 7 does not constitute a limitation to the UE. The UE may include more or fewer components than those shown in the figure, or combine some components, or have different component arrangements. Details are not described herein again.

It is to be understood that, in embodiments of this application, the input unit 1004 may include a graphics processing unit (Graphics Processing Unit, GPU) 10041 and a microphone 10042. The graphics processing unit 10041 performs processing on image data of a static picture or a video obtained by an image capture apparatus (for example, a camera) in a video capture mode or an image capture mode. The display unit 1006 may include a display panel 10061. The display panel 10061 may be configured in the form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include, but is not limited to, a physical keyboard, a functional key (such as a volume control key or a switch key), a track ball, a mouse, and a joystick. Details are not described herein again.

In embodiments of this application, after receiving downlink data from a network side device, the radio frequency unit 1001 may transmit the downlink data to the processor 1010 for processing. In addition, the radio frequency unit 1001 may transmit uplink data to the network side device. Generally, the radio frequency unit 1001 includes, but is not limited to, an antenna, an amplifier, a transceiver, a coupler, a low noise amplifier, a duplexer, and the like.

The memory 1009 may be configured to store a software program and various types of data. The memory 1009 may mainly include a first storage area storing a program or instructions and a second storage area storing data. The first storage area may store an operating system, an application or instructions required by at least one function (for example, a sound playback function and an image display function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (EPROM), an electrically erasable programmable read-only memory (Erasable PROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DR RAM). The memory 1009 in the embodiments of this application includes, but is not limited to, these and any other suitable types of memories.

The processor 1010 may include one or more processing units. Optionally, the processor 1010 integrates an application processor and a modulation and demodulation processor. The application processor mainly processes operations related to an operating system, a user interface, an application program, and the like. The modulation and demodulation processor mainly processes a wireless communication signal, for example, a baseband processor. It may be understood that the foregoing modulation and demodulation processor may alternatively not be integrated into the processor 1010.

The radio frequency unit 1001 may be configured to receive a first downlink channel from a network side device. The processor 1010 may be configured to determine a feedback resource according to first information. The feedback resource is used for the UE to transmit feedback information of the first downlink channel. The first information includes at least one of the following: a number of bits of the feedback information; a feedback mode of the feedback information; and a channel type of the first downlink channel.

In a possible implementation, the first information includes: a number of bits of the feedback information, or a feedback mode of the feedback information. The processor 1010 may be specifically configured to: determine the foregoing feedback resource according to indication of DCI in a case that the first information meets a first condition; or, determine the feedback resource according to the number of bits of the feedback information, a bit state of the feedback information, and a first mapping relationship in a case that the first information meets a second condition. The first mapping relationship is: a mapping relationship between the number of bits of the feedback information, the bit state of the feedback information and the feedback resource.

In an implementation, the first condition includes at least one of the following: the number of bits of the feedback information is 1; the feedback mode is configured as a first mode; and the feedback mode is not configured as a second mode. And/or, the second condition includes at least one of the following: the number of bits of the feedback information is greater than 1; the feedback mode is not configured as a first mode; and the feedback mode is configured as a second mode.

In a possible implementation, the first information includes: a number of bits of the feedback information. The processor 1010 may be specifically configured to determine the foregoing feedback resource from a first resource subset according to the number of bits of the feedback information, the bit state of the feedback information, and the first mapping relationship. The first resource subset is determined according to DCI and/or a CCE index corresponding to the DCI. The first mapping relationship is: a mapping relationship between the number of bits of the feedback information, the bit state of the feedback information and the feedback resource.

In a possible implementation, the first information includes: a number of bits of the feedback information, or a feedback mode of the feedback information. The processor 1010 may be specifically configured to determine the foregoing feedback resource according to the first information in a case that a feedback mode corresponding to a first downlink channel is a NACK ONLY feedback mode. The feedback mode is a mode in which the UE1000 transmits the foregoing feedback information.

In a possible implementation, the first information includes: a channel type of the first downlink channel. The processor 1010 may be specifically configured to: determine the foregoing feedback resource according to second information in a case that the channel type of the first downlink channel meets a third condition; or, determine the feedback resource according to the third information in a case that the channel type of the first downlink channel meets a fourth condition.

In a possible implementation, the third condition may include at least one of the following: the channel type includes a unicast semi-persistent scheduling type; the channel type includes a multicast semi-persistent scheduling type, and a feedback mode corresponding to at least one semi-persistent scheduling downlink channel in the multicast semi-persistent scheduling downlink channel is an ACK/NACK mode; and the channel type includes a unicast semi-persistent scheduling type and a multicast semi-persistent scheduling type. The second information includes: a first resource for semi-persistent downlink channel feedback; and a second resource for semi-persistent downlink channel feedback.

In a possible implementation, the processor 1010 may be specifically configured to: determine the second resource for semi-persistent downlink channel feedback as the foregoing feedback resource in a case that the UE1000 is not configured with the first resource for semi-persistent downlink channel feedback; or, determine the feedback resource from the first resource for semi-persistent downlink channel feedback according to a number of bits of feedback information in a case that the UE1000 is configured with the first resource for semi-persistent downlink channel feedback.

In a possible implementation, the fourth condition may include: the channel type only includes a multicast semi-persistent scheduling type, and a feedback mode corresponding to the multicast semi-persistent scheduling downlink channel is a NACK ONLY mode. The third information includes at least one of the following: a number of bits of the feedback information, a bit state of the feedback information, and a first mapping relationship; a feedback mode of the feedback information; a first resource for semi-persistent downlink channel feedback; and a second resource for semi-persistent downlink channel feedback. The first mapping relationship is: a mapping relationship between the number of bits of the feedback information, the bit state of the feedback information and the feedback resource.

In a possible implementation, the third information includes: a number of bits of the feedback information, a bit state of the feedback information, and a first mapping relationship. The processor 1010 may be specifically configured to determine the foregoing feedback resource according to the number of bits of the feedback information, the bit state of the feedback information, and the first mapping relationship.

In a possible implementation, the processor 1010 may be specifically configured to: determine the foregoing feedback resource according to the number of bits of the feedback information, the bit state of the feedback information, and the first mapping relationship in a case that the feedback mode is configured as a second mode; or, determine the feedback resource according to the first resource for semi-persistent downlink channel feedback or the second resource for semi-persistent downlink channel feedback in a case that the feedback mode is not configured as the second mode.

In a possible implementation, the third information includes: a first resource for semi-persistent downlink channel feedback and a second resource for semi-persistent downlink channel feedback. The processor 1010 may be specifically configured to: determine the second resource for semi-persistent downlink channel feedback as the foregoing feedback resource in a case that the UE1000 is not configured with the first resource for semi-persistent downlink channel feedback; or, determine the feedback resource from the first resource for semi-persistent downlink channel feedback according to a number of bits of feedback information in a case that the UE1000 is configured with the first resource for semi-persistent downlink channel feedback.

In the UE according to the embodiments of this application, after receiving the first downlink channel from the network side device, the UE may determine, according to at least one of the number of bits of the feedback information, the feedback mode of the feedback information, and the channel type of the first downlink channel, the feedback resource for transmitting the feedback information of the first downlink channel. Therefore, flexibility of determining the feedback resource can be improved.

The UE according to the embodiments of this application can implement various processes implemented by the UE in the foregoing method embodiments, and the same technical effects can be achieved. To avoid repetition, details are not described herein again.

An embodiment of this application further provides a network side device, including a processor and a communication interface. The communication interface is configured to transmit a first downlink channel to UE. The processor is configured to determine a feedback resource according to first information. The feedback resource is used for the network side device to receive feedback information of the first downlink channel. The first information includes at least one of the following: a number of bits of the feedback information; a feedback mode of the feedback information; and a channel type of the first downlink channel. The network side device embodiment corresponds to the foregoing network side device method embodiment. Various implementation processes and implementations of the foregoing method embodiments are all applicable to the network side device embodiment, and the same technical effects can be achieved.

Specifically, an embodiment of this application further provides a network side device. As shown in FIG. 8, the network side device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and transmits the received information to the baseband apparatus 83 for processing. In a downlink direction, the baseband apparatus 83 performs processing on information to be transmitted and transmits processed information to the radio frequency apparatus 82. The radio frequency apparatus 82 performs processing on the received information and transmits the processed information through the antenna 81.

The method performed by the network side device in the above embodiments may be implemented in the baseband apparatus 83. The baseband apparatus 83 includes a baseband processor.

For example, the baseband apparatus 83 may include at least one baseband board. A plurality of chips are arranged on the baseband board, as shown in FIG. 8, one of the chips is, for example, a baseband processor and is connected to the memory 85 through a bus interface to call a program in the memory 85 to perform operations of the network device shown in the above method embodiments.

The network side device may further include a network interface 86. The interface is, for example, a common public radio interface (common public radio interface, CPRI).

Specifically, the network side device 800 according to the embodiments of this application further includes: instructions or a program stored in the memory 85 and executable by the processor 84. The processor 84 calls the instructions or the program in the memory 85 to perform the method performed by various modules shown in FIG. 5, and the same technical effects are achieved. To avoid repetition, details are not described herein again.

The radio frequency apparatus 82 may be configured to transmit a first downlink channel to UE. The processor 84 may be configured to determine a feedback resource according to first information. The feedback resource is used for the network side device 800 to receive feedback information of the first downlink channel. The first information includes at least one of the following: a number of bits of the feedback information; a feedback mode of the feedback information; and a channel type of the first downlink channel.

In a possible implementation, the first information includes: a number of bits of the feedback information, or a feedback mode of the feedback information. The processor 84 may be specifically configured to: configure the foregoing feedback resource in a case that the first information meets a first condition; or, determine the feedback resource according to the number of bits of the feedback information, a bit state of the feedback information, and a first mapping relationship in a case that the first information meets a second condition. The first mapping relationship is: a mapping relationship between the number of bits of the feedback information, the bit state of the feedback information and the feedback resource.

In an implementation, the first condition includes at least one of the following: the number of bits of the feedback information is 1; the feedback mode is configured as a first mode; and the feedback mode is not configured as a second mode. And/or, the second condition includes at least one of the following: the number of bits of the feedback information is greater than 1; the feedback mode is not configured as a first mode; and the feedback mode is configured as a second mode.

In a possible implementation, the first information includes: a number of bits of the feedback information. The processor 84 may be specifically configured to determine the foregoing feedback resource from a first resource subset according to the number of bits of the feedback information, the bit state of the feedback information, and the first mapping relationship. The first resource subset is configured by the network side device 800. The first mapping relationship is: a mapping relationship between the number of bits of the feedback information, the bit state of the feedback information and the feedback resource.

In a possible implementation, the first information includes: a number of bits of the feedback information, or a feedback mode of the feedback information. The processor 84 may be specifically configured to determine the foregoing feedback resource according to the first information in a case that a feedback mode corresponding to a first downlink channel is a NACK ONLY feedback mode. The feedback mode is a mode in which the UE transmits the foregoing feedback information.

In a possible implementation, the first information includes: a channel type of the first downlink channel. The processor 84 may be specifically configured to: determine the foregoing feedback resource according to second information in a case that the channel type of the first downlink channel meets a third condition; or, determine the feedback resource according to the third information in a case that the channel type of the first downlink channel meets a fourth condition.

In a possible implementation, the third condition may include at least one of the following: the channel type includes a unicast semi-persistent scheduling type; the channel type includes a multicast semi-persistent scheduling type, and a feedback mode corresponding to at least one semi-persistent scheduling downlink channel in the multicast semi-persistent scheduling downlink channel is an ACK/NACK mode; and the channel type includes a unicast semi-persistent scheduling type and a multicast semi-persistent scheduling type. The second information includes: a first resource for semi-persistent downlink channel feedback; and a second resource for semi-persistent downlink channel feedback.

In a possible implementation, the processor 84 may be specifically configured to: determine the second resource for semi-persistent downlink channel feedback as the foregoing feedback resource in a case that the first resource for semi-persistent downlink channel feedback is not configured for the UE; or, determine the feedback resource from the first resource for semi-persistent downlink channel feedback according to a number of bits of feedback information in a case that the first resource for semi-persistent downlink channel feedback is configured for the UE.

In a possible implementation, the fourth condition may include: the channel type only includes a multicast semi-persistent scheduling type, and a feedback mode corresponding to the multicast semi-persistent scheduling downlink channel is a NACK ONLY mode. The third information includes at least one of the following: a number of bits of the feedback information, a bit state of the feedback information, and a first mapping relationship; a feedback mode of the feedback information; a first resource for semi-persistent downlink channel feedback; and a second resource for semi-persistent downlink channel feedback. The first mapping relationship is: a mapping relationship between the number of bits of the feedback information, the bit state of the feedback information and the feedback resource.

In a possible implementation, the third information includes: a number of bits of the feedback information, a bit state of the feedback information, and a first mapping relationship. The processor 84 may be specifically configured to determine the foregoing feedback resource according to the number of bits of the feedback information, the bit state of the feedback information, and the first mapping relationship.

In a possible implementation, the processor 84 may be specifically configured to: determine the foregoing feedback resource according to the number of bits of the feedback information, the bit state of the feedback information, and the first mapping relationship in a case that the feedback mode is configured as a second mode; or, determine the feedback resource according to the first resource for semi-persistent downlink channel feedback or the second resource for semi-persistent downlink channel feedback in a case that the feedback mode is not configured as a second mode.

In a possible implementation, the third information includes: a first resource for semi-persistent downlink channel feedback and a second resource for semi-persistent downlink channel feedback. The processor 84 may be specifically configured to: determine the second resource for semi-persistent downlink channel feedback as the foregoing feedback resource in a case that the first resource for semi-persistent downlink channel feedback is not configured for the UE; or, determine the feedback resource from the first resource for semi-persistent downlink channel feedback according to a number of bits of feedback information in a case that the first resource for semi-persistent downlink channel feedback is configured for the UE.

In the network side device according to the embodiments of this application, after transmitting the first downlink channel to the UE, the network side device may determine, according to at least one of the number of bits of the feedback information, the feedback mode of the feedback information, and the channel type of the first downlink channel, the feedback resource for transmitting the feedback information of the first downlink channel. Therefore, flexibility of determining the feedback resource can be improved.

The network side device according to the embodiments of this application can implement various processes implemented by the network side device in the foregoing method embodiments, and the same technical effects can be achieved. To avoid repetition, details are not described herein again.

An embodiment of this application further provides a readable storage medium. The readable storage medium stores a program or instructions. The program or instructions may implement various processes of the foregoing feedback resource method embodiments when executed by a processor, and the same technical effects can be achieved. To avoid repetition, details are not described herein again.

The processor is a processor in the terminal in the above-mentioned embodiments. The readable storage medium includes a computer-readable storage medium, for example, a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or instructions to implement various processes of the foregoing feedback resource determining method embodiments, and the same technical effects can be achieved. To avoid repetition, details are not described herein again.

It is to be understood that the chip mentioned in the embodiments of this application may alternatively be referred to as a system-level chip, a system chip, a chip system, a system on chip, or the like.

An embodiment of this application further provides a computer program/program product. The computer program/program product is stored in a storage medium. The computer program/program product is executed by at least one processor to implement various processes of the foregoing feedback resource determining method, and the same technical effects can be achieved. To avoid repetition, details are not described herein again.

An embodiment of this application further provides a communication system, including: UE and a network side device. The UE may be configured to perform steps of the UE side method described above. The network side device may be configured to perform steps of the network side device method described above.

It is to be noted that, terms "include", "comprise", or any other variation thereof herein are intended to cover a non-exclusive inclusion, such that a process, method, article or apparatus including a series of elements not only includes those elements, but also includes other elements that are not explicitly listed, or includes elements inherent to such a process, method, article or apparatus. Without more limitations, elements defined by the sentence "including one" does not exclude that there are other same elements in the process, the method, the article, or the apparatus. In addition, it is to be noted that scopes of the methods and apparatuses in implementations of this application are not limited to performing functions in an order shown or discussed, but may alternatively include performing the functions in a substantially simultaneous mode or in a reverse order according to the functions involved. For example, the described methods may be implemented in an order different from that described, and various steps may be added, omitted, or combined. In addition, features described with reference to some examples may alternatively be combined in other examples.

Through descriptions of the above implementations, those skilled in the art may clearly learn that the methods according to the foregoing embodiments may be implemented by software and a necessary universal hardware platform, or may be certainly implemented by hardware. However, the former is a better implementation in many cases. Based on such an understanding, the technical solutions of this application essentially, or the part contributing to the conventional technology may be embodied in the form of a computer software product. The computer software product is stored in a storage medium (for example, a ROM/RAM, a magnetic disc, or a compact disc) including several instructions to enable a terminal (which may be a mobile phone, a computer, a server, an air conditioner, a network side device, or the like) to perform the methods described in various embodiments of this application.

Embodiments of this application have been described above with reference to accompanying drawings. However, this application is not limited to the foregoing specific implementations. The foregoing specific embodiments are merely examples rather than restrictions. Those of ordinary skill in the art may make many forms under the teaching of this application without departing from the spirit of this application and the scope of protection of claims, which all fall within the scope of protection of this application.

## Claims

1. A feedback resource determining method, comprising:
receiving, by a user equipment UE, a first downlink channel from a network side device; and
determining, by the UE, a feedback resource according to first information, wherein the feedback resource is used for the UE to transmit feedback information of the first downlink channel, wherein
the first information comprises at least one of the following:
a number of bits of the feedback information;
a feedback mode of the feedback information; and
a channel type of the first downlink channel.

2. The method according to claim 1, wherein the first information comprises: a number of bits of the feedback information, or a feedback mode of the feedback information; and
the determining, by the UE, a feedback resource according to first information comprises:
determining, by the UE, the feedback resource according to an indication of downlink control information DCI in a case that the first information meets a first condition; or,
determining, by the UE, the feedback resource according to the number of bits of the feedback information, a bit state of the feedback information, and a first mapping relationship in a case that the first information meets a second condition, wherein
the first mapping relationship is: a mapping relationship between the number of bits of the feedback information, the bit state of the feedback information and the feedback resource.

3. The method according to claim 2, wherein
the first condition comprises at least one of the following: the number of bits of the feedback information is 1; the feedback mode is configured as a first mode; and the feedback mode is not configured as a second mode;
and/or,
the second condition comprises at least one of the following: the number of bits of the feedback information is greater than 1; the feedback mode is not configured as a first mode; and the feedback mode is configured as a second mode.

4. The method according to claim 1, wherein the first information comprises: the number of bits of the feedback information; and
the determining, by the UE, a feedback resource according to first information comprises:
determining, by the UE, the feedback resource from a first resource subset according to the number of bits of the feedback information, a bit state of the feedback information, and a first mapping relationship, wherein the first resource subset is determined according to DCI and/or a control channel element index CCE index corresponding to the DCI, and
the first mapping relationship is: a mapping relationship between the number of bits of the feedback information, the bit state of the feedback information and the feedback resource.

5. The method according to any one of claims 1 to 4, wherein the first information comprises: a number of bits of the feedback information, or a feedback mode of the feedback information; and
the determining, by the UE, a feedback resource according to first information comprises:
determining, by the UE, the feedback resource according to the first information in a case that the feedback mode corresponding to the first downlink channel is a negative acknowledgement only NACK ONLY feedback mode, wherein the feedback mode is a mode in which the UE transmits the feedback information.

6. The method according to claim 1, wherein the first information comprises: the channel type of the first downlink channel; and
the determining, by the UE, a feedback resource according to first information comprises:
determining, by the UE, the feedback resource according to second information in a case that the channel type of the first downlink channel meets a third condition; or,
determining, by the UE, the feedback resource according to third information in a case that the channel type of the first downlink channel meets a fourth condition.

7. The method according to claim 6, wherein
the third condition comprises any one of the following:
the channel type comprises a unicast semi-persistent scheduling type;
the channel type comprises a multicast semi-persistent scheduling type, and a feedback mode corresponding to at least one semi-persistent scheduling downlink channel in a multicast semi-persistent scheduling downlink channel is an acknowledgment/negative acknowledgment ACK/NACK mode; and
the channel type comprises a unicast semi-persistent scheduling type and a multicast semi-persistent scheduling type; and
the second information comprises: a first resource for semi-persistent downlink channel feedback; and a second resource for semi-persistent downlink channel feedback.

8. The method according to claim 7, wherein the determining, by the UE, the feedback resource according to second information comprises:
determining, by the UE, the second resource for semi-persistent downlink channel feedback as the feedback resource in a case that the UE is not configured with the first resource for semi-persistent downlink channel feedback; or,
determining, by the UE, the feedback resource from the first resource for semi-persistent downlink channel feedback according to the number of bits of the feedback information in a case that the UE is configured with the first resource for semi-persistent downlink channel feedback.

9. The method according to claim 6, wherein
the fourth condition comprises: the channel type only comprises a multicast semi-persistent scheduling type, and a feedback mode corresponding to the multicast semi-persistent scheduling downlink channel is a NACK ONLY mode; and
the third information comprises at least one of the following:
a number of bits of the feedback information, a bit state of the feedback information, and a first mapping relationship;
a feedback mode of the feedback information;
a first resource for semi-persistent downlink channel feedback; and
a second resource for semi-persistent downlink channel feedback, wherein
the first mapping relationship is: a mapping relationship between the number of bits of the feedback information, the bit state of the feedback information and the feedback resource.

10. The method according to claim 9, wherein the third information comprises: the number of bits of the feedback information, the bit state of the feedback information, and the first mapping relationship; and
the determining, by the UE, the feedback resource according to third information comprises:
determining, by the UE, the feedback resource according to the number of bits of the feedback information, the bit state of the feedback information, and the first mapping relationship.

11. The method according to claim 9, wherein
the determining, by the UE, the feedback resource according to third information comprises:
determining, by the UE, the feedback resource according to the number of bits of the feedback information, the bit state of the feedback information, and the first mapping relationship in a case that the feedback mode is configured as a second mode; or,
determining, by the UE, the feedback resource according to the first resource for semi-persistent downlink channel feedback or the second resource for semi-persistent downlink channel feedback in a case that the feedback mode is not configured as a second mode.

12. The method according to claim 9, wherein the third information comprises: the first resource for semi-persistent downlink channel feedback and the second semi-persistent downlink channel feedback information; and
the determining, by the UE, the feedback resource according to third information comprises:
determining, by the UE, the second resource for semi-persistent downlink channel feedback as the feedback resource in a case that the UE is not configured with the first resource for semi-persistent downlink channel feedback; or,
determining, by the UE, the feedback resource from the first resource for semi-persistent downlink channel feedback according to the number of bits of the feedback information in a case that the UE is configured with the first resource for semi-persistent downlink channel feedback.

13. A feedback resource determining method, comprising:
transmitting, by a network side device, a first downlink channel to UE; and
determining, by the network side device, a feedback resource according to first information, wherein the feedback resource is used for the network side device to receive feedback information of the first downlink channel, and
the first information comprises at least one of the following:
a number of bits of the feedback information;
a feedback mode of the feedback information; and
a channel type of the first downlink channel.

14. The method according to claim 13, wherein the first information comprises: a number of bits of the feedback information, or a feedback mode of the feedback information; and
the determining, by the network side device, a feedback resource according to first information comprises:
configuring, by the network side device, the feedback resource in a case that the first information meets a first condition; or,
determining, by the network side device, the feedback resource according to the number of bits of the feedback information, a bit state of the feedback information, and a first mapping relationship in a case that the first information meets a second condition, wherein
the first mapping relationship is: a mapping relationship between the number of bits of the feedback information, the bit state of the feedback information and the feedback resource.

15. The method according to claim 14, wherein
the first condition comprises at least one of the following: the number of bits of the feedback information is 1; the feedback mode is configured as a first mode; and the feedback mode is not configured as a second mode;
and/or,
the second condition comprises at least one of the following: the number of bits of the feedback information is greater than 1; the feedback mode is not configured as a first mode; and the feedback mode is configured as a second mode.

16. The method according to claim 13, wherein the first information comprises: the number of bits of the feedback information; and
the determining, by the network side device, a feedback resource according to first information comprises:
determining, by the network side device, the feedback resource from a first resource subset according to the number of bits of the feedback information, the bit state of the feedback information, and the first mapping relationship, wherein the first resource subset is a resource set configured by the network side device, and
the first mapping relationship is: a mapping relationship between the number of bits of the feedback information, the bit state of the feedback information and the feedback resource.

17. The method according to any one of claims 13 to 16, wherein the first information comprises: a number of bits of the feedback information, or a feedback mode of the feedback information; and
the determining, by the network side device, a feedback resource according to first information comprises:
determining, by the network side device, the feedback resource according to the first information in a case that the feedback mode corresponding to the first downlink channel is a NACK ONLY feedback mode, wherein the feedback mode is a mode in which the UE transmits the feedback information.

18. The method according to claim 13, wherein the first information comprises: the channel type of the first downlink channel; and
the determining, by the network side device, a feedback resource according to first information comprises:
determining, by the network side device, the feedback resource according to second information in a case that the channel type of the first downlink channel meets a third condition; or,
determining, by the network side device, the feedback resource according to third information in a case that the channel type of the first downlink channel meets a fourth condition.

19. The method according to claim 18, wherein
the third condition comprises any one of the following:
the channel type comprises a unicast semi-persistent scheduling type;
the channel type comprises a multicast semi-persistent scheduling type, and a feedback mode corresponding to at least one semi-persistent scheduling downlink channel in the multicast semi-persistent scheduling downlink channel is an ACK/NACK mode; and
the channel type comprises a unicast semi-persistent scheduling type and a multicast semi-persistent scheduling type; and
the second information comprises: a first resource for semi-persistent downlink channel feedback; and a second resource for semi-persistent downlink channel feedback.

20. The method according to claim 19, wherein the determining, by the network side device, the feedback resource according to second information comprises:
determining, by the network side device, the second resource for semi-persistent downlink channel feedback as the feedback resource in a case that the first resource for semi-persistent downlink channel feedback is not configured for the UE; or,
determining, by the network side device, the feedback resource from the first resource for semi-persistent downlink channel feedback according to the number of bits of the feedback information in a case that the first resource for semi-persistent downlink channel feedback is configured for the UE.

21. The method according to claim 18, wherein
the fourth condition comprises: the channel type only comprises a multicast semi-persistent scheduling type, and a feedback mode corresponding to the multicast semi-persistent scheduling downlink channel is a NACK ONLY mode; and
the third information comprises at least one of the following:
a number of bits of the feedback information, a bit state of the feedback information, and a first mapping relationship;
a feedback mode of the feedback information;
a first resource for semi-persistent downlink channel feedback; and
a second resource for semi-persistent downlink channel feedback, wherein
the first mapping relationship is: a mapping relationship between the number of bits of the feedback information, the bit state of the feedback information and the feedback resource.

22. The method according to claim 21, wherein the third information comprises: a number of bits of the feedback information, a bit state of the feedback information, and a first mapping relationship; and
the determining, by the network side device, the feedback resource according to third information comprises:
determining, by the network side device, the feedback resource according to the number of bits of the feedback information, the bit state of the feedback information, and the first mapping relationship.

23. The method according to claim 21, wherein
the determining, by the network side device, the feedback resource according to third information comprises:
determining, by the network side device, the feedback resource according to the number of bits of the feedback information, the bit state of the feedback information, and the first mapping relationship in a case that the feedback mode is configured as a second mode; or,
determining, by the network side device, the feedback resource according to the first resource for semi-persistent downlink channel feedback or the second resource for semi-persistent downlink channel feedback in a case that the feedback mode is not configured as a second mode.

24. The method according to claim 21, wherein the third information comprises: the first resource for semi-persistent downlink channel feedback and the second semi-persistent downlink channel feedback information; and
the determining, by the network side device, the feedback resource according to third information comprises:
determining, by the network side device, the second resource for semi-persistent downlink channel feedback as the feedback resource in a case that the first resource for semi-persistent downlink channel feedback is not configured for the UE; or,
determining, by the network side device, the feedback resource from the first resource for semi-persistent downlink channel feedback according to the number of bits of the feedback information in a case that the first resource for semi-persistent downlink channel feedback is configured for the UE.

25. A feedback resource determining apparatus, comprising a receiving module and a determining module, wherein
the receiving module is configured to receive a first downlink channel from a network side device; and
the determining module is configured to determine a feedback resource according to first information, wherein the feedback resource is used for UE to transmit feedback information of the first downlink channel, and
the first information comprises at least one of the following:
a number of bits of the feedback information;
a feedback mode of the feedback information; and
a channel type of the first downlink channel.

26. A feedback resource determining apparatus, comprising a transmitting module and a determining module, wherein
the transmitting module is configured to transmit a first downlink channel to UE; and
the determining module is configured to determine a feedback resource according to first information, wherein the feedback resource is used for the network side device to receive feedback information of the first downlink channel, and
the first information comprises at least one of the following:
a number of bits of the feedback information;
a feedback mode of the feedback information; and
a channel type of the first downlink channel.

27. A terminal, comprising a processor and a memory, wherein the memory stores a program or instructions executable by the processor, and the program or instructions perform steps of the feedback resource determining method according to any one of claims 1 to 12 when executed by the processor.

28. A network side device, comprising a processor and a memory, wherein the memory stores a program or instructions executable by the processor, and the program or instructions perform steps of the feedback resource determining method according to any one of claims 13 to 24 when executed by the processor.

29. A communication system, comprising the feedback resource determining apparatus according to claim 25 and the feedback resource determining apparatus according to claim 26; or,
comprising the terminal according to claim 27 and the network side device according to claim 28.

30. A readable storage medium, storing a program or instructions, the program or instructions, when executed by a processor, implement the feedback resource determining method according to any one of claims 1 to 12, or implement the feedback resource determining method according to any one of claims 13 to 24.
